# EUROPÄISCHE PATENTSCHRIFT

(11) **EP 4 186 628 B1**
(45) Veröffentlichungstag und Bekanntmachung des Hinweises auf die Patenterteilung: **02.09.2026**
(21) Anmeldenummer: 21211385.6
(22) Anmeldetag: 30.11.2021
(51) Int. Cl.: B23K 9/167, B23K 9/173, B23K 9/073, B23K 9/12, B23K 9/095, B23K 9/32, B23K 10/00, B23K 3/08

(54) **VORRICHTUNG UND SYSTEM ZUM SCHWEISSEN ODER LÖTEN UNTER SCHUTZGASATMOSPHÄRE SOWIE VERFAHREN ZUM STEUERN EINER ABSAUGEINRICHTUNG EINER SOLCHEN VORRICHTUNG**
DEVICE AND SYSTEM FOR WELDING OR BRAZING UNDER A SHIELDING GAS ATMOSPHERE, AND METHOD FOR CONTROLLING THE EXTRACTION UNIT OF SUCH A DEVICE
DISPOSITIF ET SYSTÈME DE SOUDAGE OU DE BRASAGE SOUS ATMOSPHÈRE DE GAZ PROTECTEUR, AINSI QUE PROCÉDÉ DE COMMANDE DE L'UNITÉ D'ASPIRATION D'UN TEL DISPOSITIF

(43) Veröffentlichungstag der Anmeldung: 31.05.2023
(73) Patentinhaber: EWM GmbH, 56271 Mündersbach (DE)
(72) Erfinder: SZCZESNY, Michael, 56271 Mündersbach (DE)
(74) Vertreter: Cohausz & Florack

(56) Entgegenhaltungen:
- EP-B1- 2 292 367
- DE-A1- 102019 119 341
- FR-A1- 3 090 436
- US-A1- 2001 025 837

## Beschreibung

Die Erfindung betrifft eine Vorrichtung zum Schweißen oder Löten unter Schutzgasatmosphäre mit einer Stromquelle zur Bereitstellung eines Schweiß- oder Lötstroms, mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung zur Steuerung der Absaugeinrichtung. Die Erfindung betrifft weiterhin ein System zum Schweißen oder Löten unter Schutzgasatmosphäre umfassend eine solche Vorrichtung. Weiterhin betrifft die Erfindung ein Verfahren zum Steuern einer Absaugeinrichtung einer Vorrichtung zum Schweißen oder Löten unter Schutzgasatmosphäre.

Die beim Schweißen oder Löten auftretenden hohen Temperaturen führen zur Bildung von Abgasen, insbesondere Rauchgas, die zum Teil gesundheitsschädlich sind. Zum Schutz der in unmittelbarer Nähe des Schweißvorgangs tätigen Arbeitskräfte ist es erforderlich, diese Abgase vom Arbeitsplatz abzusaugen, ehe sie sich mit der Raumluft mischen.

Eine besondere Schwierigkeit beim Absaugen der Abgase zeigt sich, wenn Verfahren zum Schweißen oder Löten unter Schutzgasatmosphäre durchgeführt werden. Für einen ordnungsgemäßen Betrieb ist es erforderlich, dass das während des Schweiß- oder Lötvorgangs applizierte Schutzgas die Elektrode und das Werkstück an der Stelle, an der Material aufgeschmolzen wird, sicher abdeckt. Andernfalls kann es an der betreffenden Stelle zu Oxidationsvorgängen und anderen Reaktionen kommen, die die Qualität des Schweißens oder Lötens nachteilig beeinflussen können. Wenn Schutzgas unmittelbar an der Elektrode, die den Lichtbogen erzeugt, oder um diese herum vorgesehen wird, ist es zur Ausbildung eines stabilen Schutzgasmantels erforderlich, dass keine störenden Luftströmungen das Schutzgas fortreißen.

Aus dem Stand der Technik sind verschiedene Verfahren und Vorrichtung zur Steuerung der Absaugeinrichtung einer Schweißvorrichtung bekannt. In der EP 2 292 367 B1, auf der der Oberbegriff des Patentanspruchs 1 basiert, wird beispielsweise ein Verfahren offenbart, bei dem die Absaugung in Abhängigkeit von an der Schweißvorrichtung einstellbaren oder voreingestellten Prozessparametern des Schweißprozesses und von zusätzlich erfassten Größen, wie dem Abstand zwischen Brennerspitze und Werkstück, gesteuert wird, nämlich zum Beispiel für die Brennervorschubgeschwindigkeit, die Drahtvorschubgeschwindigkeit oder den Drahtdurchmesser.

Es hat sich jedoch gezeigt, dass bei einer solchen automatischen Steuerung der Absaugeinrichtung relevante Einflussgrößen für die Absaugung unberücksichtigt bleiben.

Aus der DE 10 2019 119 341 A1 ist eine Steuerung einer Absaugeinrichtung abhängig von der Lage bzw. von Lageänderungen des Brenners bekannt, die mittels eines entsprechenden Sensormittels im Brenner bestimmt werden. Die Lage des Brenners kann beispielsweise über Abstandsmessungen mittels eines Ultraschallsenders und eines ortsfesten -empfängers bestimmt werden.

Vor diesem Hintergrund liegt der vorliegenden Erfindung die Aufgabe zu Grunde, ein Verfahren und eine Vorrichtung zur Verfügung zu stellen, mit denen die Steuerung der Absaugung vereinfacht und/oder verbessert wird.

Diese Aufgabe wird erfindungsgemäß gelöst durch eine Vorrichtung zum Schweißen oder Löten unter Schutzgasatmosphäre mit einer Stromquelle zur Bereitstellung eines Schweiß- oder Lötstroms, mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung zur Steuerung der Absaugeinrichtung, wobei die Steuereinrichtung dazu eingerichtet ist, eine Abstands-Information über den Brennerabstand eines an die Anschlussmittel angeschlossenen Brenners zur Schweiß- oder Lötstelle zu erhalten, und zwar abhängig von aktuellen Schweiß- oder Lötparametern zu ermitteln, und die Absaugeinrichtung abhängig von der ermittelten Abstands-Information zu steuern, siehe Anspruch 1.

Verfahrensmäßig wird die zuvor genannte Aufgabe erfindungsgemäß gelöst durch ein Verfahren zum Steuern einer Absaugeinrichtung einer Vorrichtung zum Schweißen oder Löten unter Schutzgasatmosphäre, insbesondere der zuvor beschriebenen Vorrichtung oder einer Ausführungsform davon, bei dem eine Abstands-Information über den Brennerabstand eines an die Anschlussmittel angeschlossenen Brenners zur Schweiß- oder Lötstelle ermittelt wird und die Absaugeinrichtung abhängig von der ermittelten Abstands-Information gesteuert wird, wobei die Abstands-Information abhängig von aktuellen Schweiß- oder Lötparametern ermittelt wird, siehe Anspruch 10.

Die Vorrichtung ist zum Schweißen oder Löten unter Schutzgasatmosphäre ausgebildet. Insbesondere kann die Vorrichtung zum Metallschutzgasschweißen (MSG-Schweißen), zum Beispiel zum Metallinertgasschweißen (MIG-Schweißen) oder Metallaktivgasschweißen (MAG-Schweißen), ausgebildet sein. Alternativ kann die Vorrichtung auch zum Einsatz beim Wolfram-Inertgas-Schweißen (WIG-Schweißen) oder zum Plasmaschweißen ausgebildet sein.

Die Vorrichtung kann eine Stromquelle, insbesondere Schweißstromquelle oder Lötstromquelle, zur Bereitstellung eines Schweiß- oder Lötstroms umfassen. Beispielsweise kann die Absaugeinrichtung oder die Steuereinrichtung der Vorrichtung oder ein Teil davon in die Stromquelle integriert sein. Es ist aber auch denkbar, dass die Vorrichtung keine Stromquelle aufweist und zum Schweißen oder Löten eine gesonderte Stromquelle verwendet wird.

Die Vorrichtung kann entsprechend zum Beispiel alleine oder zusammen mit weiteren Geräten, zum Beispiel einer gesonderten Schweiß- oder Lötstromquelle, zum Schweißen oder Löten unter Schutzgasatmosphäre verwendet werden.

Die Vorrichtung kann in einem oder mehreren Gehäusen untergebracht sein. Insbesondere kann die Vorrichtung mehr als ein Gerät umfassen, beispielsweise eine Stromquelle und ein Drahtvorschubgerät oder eine als gesondertes Gerät ausgebildete Absaugeinrichtung und ein Drahtvorschubgerät.

Wenn die Vorrichtung eine Stromquelle zur Bereitstellung eines Schweiß- oder Lötstroms aufweist, umfasst diese vorzugsweise ein Leistungsteil zur Bereitstellung des Schweiß- oder Lötstroms sowie eine Steuereinheit zur Steuerung der Stromquelle.

Die Vorrichtung weist weiter Anschlussmittel zum Anschließen eines Brenners mit integrierter Absaugung auf. Die Anschlussmittel können insbesondere ein oder mehrere Anschlüsse umfassen, an die für den Betrieb das Schlauchpaket des Brenners angeschlossen werden kann. Bei dem Brenner handelt es sich vorzugsweise um einen Handbrenner. Alternativ kann es sich bei dem Brenner auch um einen Brenner für das automatisierte Schweißen, insbesondere Roboterschweißen, handeln.

Die Vorrichtung umfasst weiter eine Absaugeinrichtung. Die Absaugeinrichtung dient zur Bereitstellung eines Absaugluftstroms über die Anschlussmittel. Zu diesem Zweck umfassen die Anschlussmittel insbesondere einen Anschluss zur Koppelung einer im Schlauchpaket des Brenners vorgesehenen Absaugleitung mit der Absaugeinrichtung.

Umfasst die Vorrichtung eine Stromquelle zur Bereitstellung eines Schweiß- oder Lötstroms, so kann die Absaugeinrichtung beispielsweise in der Stromquelle untergebracht sein.

Die Absaugeinrichtung kann alternativ auch als gesondertes Gerät vorgesehen sein. Dies ist besonders vorteilhaft beim MSG-Schweißen, da das beim MSG-Schweißen üblicherweise verwendete Drahtvorschubgerät mit dem daran angeschlossenen Schweißbrenner im Betrieb sehr weit weg von der Schweißstromquelle entfernt sein kann, zum Beispiel 30 bis 60 m. Eine separate Absaugeinrichtung kann dann in der Nähe des Drahtvorschubgeräts positioniert werden, um die Absaugleitung im Schlauchpaket des Brenners möglichst kurz und die für den gewünschten Absaugluftstrom erforderliche elektrische Leistung möglichst gering zu halten.

Die Vorrichtung umfasst weiter eine Steuereinrichtung. Die Steuereinrichtung kann zum Beispiel durch eine Steuereinheit der Absaugeinrichtung oder, wenn die Vorrichtung eine Schweiß- oder Lötstromquelle umfasst, durch eine Steuereinheit der Schweiß- oder Lötstromquelle gebildet werden oder diese umfassen. Weist die Absaugeinrichtung eine eigene Steuereinheit auf, so kann diese zum Beispiel mit einer Steuereinheit der Stromquelle und/oder mit einer Steuereinheit eines Drahtvorschubgeräts über eine Datenverbindung verbunden sein.

Die Steuereinrichtung ist dazu eingerichtet, eine Abstands-Information über den Brennerabstand eines an die Anschlussmittel angeschlossenen Brenners zur Schweiß- oder Lötstelle zu erhalten und die Absaugeinrichtung abhängig von der ermittelten Abstands-Information zu steuern. Auf diese Weise kann die Absaugeinrichtung automatisch abhängig von dem Abstand zwischen Brenner und Schweiß- oder Lötstelle betrieben werden.

Es wurde festgestellt, dass auf diese Weise eine automatisierte und verbesserte Steuerung der Absaugeinrichtung erreicht werden kann. Insbesondere kann auf diese Weise erreicht werden, dass der Betrieb der Absaugeinrichtung, vorzugsweise die Absaugleistung, automatisch in Abhängigkeit vom Brennerabstand geregelt wird. Dadurch lässt sich eine ausreichende Absaugleistung zum zuverlässigen Absaugen der Rauchgase sicherstellen und gleichzeitig vermeiden, dass der für den ordnungsgemäßen Betrieb erforderliche Schutzgasmantel nicht abgesaugt wird. Beispielsweise kann auf diese Weise automatisch berücksichtigt werden, dass bei einer Vergrößerung des Brennerabstands typischerweise eine größere Absaugleistung erforderlich ist, um die Rauchgase zuverlässig abzusaugen, während bei einer Verringerung des Brennerabstands typischerweise eine geringere Absaugleistung erforderlich ist, um den Schutzgasmantel aufrecht erhalten zu können.

Unter dem Brennerabstand eines Brenners zur Schweiß- oder Lötstelle wird vorliegend insbesondere der Abstand vom vorderen Ende des Brenners zur Schweiß- oder Lötstelle auf dem Werkstück verstanden.

Bei der Abstands-Information über den Brennerabstand kann es sich zum Beispiel um einen Betrag des Brennerabstands in einer Längeneinheit, zum Beispiel Millimeter, handeln. Bei der Abstands-Information kann es sich insbesondere um eine differentielle Angabe handeln, beispielsweise um den Wert einer Abweichung des Brennerabstands von einem vorgegebenen Abstand oder von einem Bezugswert. Weiterhin kann es sich bei der Abstands-Information um einen Wert eines Abstands handeln, der zu dem Brennerabstand in einer festen Beziehung steht, beispielsweise um den Wert eines Abstands von der Schweiß- oder Lötstelle zu einer Absaugöffnung am Brenner, der sich besonders zur Steuerung der Absaugeinheit eignet. Als Abstands-Information kommt insbesondere auch der Wert einer Größe in Frage, die mit dem Brennerabstand oder dessen Änderung so zusammenhängt, dass der Wert der Größe eine Information über den Brennerabstand oder dessen Änderung enthält. Beispielsweise kann beim MSG-Schweißen mit einer Lichtbogenlängenregelung durch Konstanthalten der über den Schweißdrahtüberstand und den Schweißlichtbogen abfallenden Spannung der Schweißstrom als Indikator für eine Änderung des Brennerabstands und damit als Abstands-Information über den Brennerabstand verwendet werden. Als Abstands-Information kann auch ein differentieller Wert einer solchen Größe, beispielsweise ein Wert einer Abweichung einer mit dem Brennerabstand in Zusammenhang stehenden Größe von einem Bezugswert verwendet werden.

Grundsätzlich ist denkbar, dass die Steuereinrichtung die Abstands-Information empfängt, beispielsweise von dem angeschlossenen Brenner, zum Beispiel bei Verwendung eines Brenners mit einer Abstandsmesseinrichtung, wie zum Beispiel einer optischen oder akustischen Abstandsmesseinrichtung, oder von einer externen Abstandsmesseinrichtung.

Bevorzugt ist die Steuereinrichtung jedoch dazu eingerichtet, die Abstands-Information über den Brennerabstand zu erhalten, indem die Steuereinrichtung Betriebsparameter einer verwendeten Schweißstromquelle, eines etwaig verwendeten Drahtvorschubgeräts und/oder des angeschlossenen Brenners erhält und die Abstands-Information abhängig von den erhaltenen Betriebsparametern berechnet. Auf diese Weise kann auf den Einsatz gesonderter Abstandsmesseinrichtungen verzichtet werden.

Die zuvor genannte Aufgabe wird erfindungsgemäß weiterhin gelöst durch ein System zum Schweißen oder Löten unter Schutzgasatmosphäre umfassend die zuvor beschriebene Vorrichtung oder eine Ausführungsform davon und einen an die Anschlussmittel der Vorrichtung anschließbaren Brenner mit integrierter Absaugung, siehe Anspruch 9.

Bei dem Brenner handelt es sich vorzugsweise um einen Handbrenner. Der Brenner kann insbesondere ein Brennerteil mit einem Handgriff und einem Brennerkopf sowie ein Schlauchpaket zum Anschluss des Brennerteils an die Anschlussmittel der Vorrichtung aufweisen. Das Schlauchpaket kann beispielsweise ein oder mehrere Anschlüsse zur Koppelung an ein oder mehrere Anschlüsse der Anschlussmittel der Vorrichtung aufweisen. Alternativ kann es sich bei dem Brenner auch um einen Brenner für das automatisierte Schweißen, insbesondere Roboterschweißen, handeln.

Im Folgenden werden verschiedene Ausführungsformen der Vorrichtung, des Systems und des Verfahrens beschrieben, wobei die einzelnen Ausführungsformen jeweils unabhängig voneinander sowohl für die Vorrichtung und das System als auch für das Verfahren gelten. Weiterhin können die Ausführungsformen beliebig untereinander kombiniert werden.

Bei einer Ausführungsform ist die Steuereinrichtung dazu eingerichtet, die Absaugleistung abhängig von der ermittelten Abstands-Information zu steuern, insbesondere einen von der ermittelten Abstands-Information abhängigen Absaugleistungswert einzustellen. Bei einer entsprechenden Ausführungsform des Verfahrens wird die Absaugleistung der Absaugeinrichtung abhängig von der ermittelten Abstands-Information gesteuert, insbesondere ein von der ermittelten Abstands-Information abhängiger Absaugleistungswert eingestellt.

Auf diese Weise kann die Absaugleistung automatisch an den Brennerabstand (z.B. *L_{B}*) zwischen Werkstück und Brenner angepasst werden, so dass eine Absaugung der Rauchgase bei gleichzeitigem Betrieb eines stabilen Schutzgasmantels gewährleistet werden kann.

Durch die Steuerung der Absaugleistung abhängig von der Abstands-Information lässt sich insbesondere die Absaugleistung abhängig vom Abstand (z.B. *L_{O}*) einer Absaugöffnung am Brenner zur Schweiß- oder Lötstelle einstellen. Die Absaugöffnung kann zum Beispiel am vorderen Ende des Brenners vorgesehen sein. In diesem Fall entspricht zum Beispiel der Abstand *L_{O}* dem Brennerabstand *L_{B}.* Typischerweise ist die Absaugöffnung jedoch um einen vorgegebenen Abstand (z.B. *C*) vom vorderen Ende des Brenners zurückversetzt. In diesem Fall entspricht der Abstand L*_{O}* zum Beispiel dem Brennerabstand *L_{B}* zuzüglich eines konstanten Abstands (z.B. *C*). In der Steuereinrichtung kann beispielsweise eine Funktion hinterlegt sein, beispielsweise in einem Datenspeicher der Steuereinrichtung, die einer erhaltenen Abstands-Information, beispielsweise einem Brennerabstandswert *L_{B},* einem Wert für den Abstand *L_{O}* und/oder einem Wert einer anderen als Abstands-Information verwendeten Größe, wie zum Beispiel dem Schweißstrom *I_{S}* oder dessen Änderung, einen zugehörigen Absaugleistungswert zuordnet, und die Steuereinrichtung kann dazu eingerichtet sein, die Absaugeinrichtung mit dem zugeordneten Absaugleistungswert zu steuern.

Die Steuerung der Absaugleistung kann beispielsweise über den Volumenstrom, beispielsweise über die Steuerung eines Ventils, oder über eine Drehzahl eines Rotors der Absaugeinrichtung gesteuert werden.

Bei dem Absaugleistungswert kann es sich beispielsweise um einen Soll-Wert oder auch um einen unteren und/oder oberen Grenzwert handeln, beispielsweise für den Volumenstrom oder für eine Rotordrehzahl der Absaugeinrichtung. Beispielsweise kann die Absaugeinrichtung eine Regelung für die Absaugleistung aufweisen, deren Soll-Wert bzw. Betriebsbereich abhängig von dem erhaltenen Messwert eingestellt wird.

Erfindungsgemäß ist die Steuereinrichtung dazu eingerichtet, die Abstands-Information abhängig von aktuellen Schweiß- oder Lötparametern zu ermitteln.

Insbesondere kann die Steuereinrichtung dazu eingerichtet sein, die Abstands-Information abhängig von einem oder mehreren der folgenden Schweiß- oder Lötparameter zu ermitteln: von der Stromquelle bereitgestellte Stromstärke (Schweiß- bzw. Lötstrom), von der Stromquelle bereitgestellte Spannung (Schweiß- bzw. Lötspannung), Drahtvorschubgeschwindigkeit eines verwendeten Drahtvorschubgeräts, Lichtbogenlänge. Auf diese Weise kann die Abstands-Information aus in der Regel ohnehin zur Verfügung stehenden oder mittels einfacher elektronischer Schaltkreise zu messenden Werten ermittelt werden, so dass gesonderte Abstandsmessmittel entbehrlich sind. Bei den Schweiß- oder Lötparametern kann es sich um gemessene Werte bzw. Ist-Werte oder auch um SollWerte einer Regelung handelt. Es ist auch denkbar, dass ein Schweißparameter direkt als Abstands-Information verwendet werden kann, beispielsweise der Schweißstrom *I_{S}**.***

Beim MSG-Schweißen kann die Abstands-Information insbesondere abhängig von der Länge des freien Schweißdrahts außerhalb des Brenners (auch als Überstandslänge oder Stickout bezeichnet) und der Lichtbogenlänge bestimmt werden, insbesondere als deren Summe. Die Überstandslänge kann als Funktion der Schweißspannung, des Schweißstroms und der Drahtvorschubgeschwindigkeit berechnet werden. Für die Lichtbogenlänge kann beispielsweise ein Sollwert einer - beim MSG-Schweißen an sich bekannten - Lichtbogenlängenregelung verwendet werden.

Beim WIG-Schweißen kann die Abstands-Information insbesondere abhängig von der Lichtbogenlänge bestimmt werden, die als Funktion der Schweißspannung berechnet werden kann. Weiterhin kann zur Berechnung der Abstands-Information die während des Schweißprozesses feste Überstandslänge der nicht-abschmelzenden Schweißelektrode berücksichtigt werden.

Bei einer Ausführungsform, insbesondere bei einer Vorrichtung zum MSG-Schweißen oder -Löten, ist die Steuereinrichtung dazu eingerichtet, eine Lichtbogenlängenregelung zu bewirken, insbesondere indem eine Schweißspannung, beispielsweise die über den überstehenden Schweißdraht und den Lichtbogen abfallende Spannung, auf einen Sollwert geregelt wird. Auf diese Weise wird die Länge des Lichtbogens konstant gehalten, während sich bei Änderung des Brennerabstands die Überstandslänge des aus dem Brenner hervorstehenden Schweißdrahtes ändert. Bei dieser Ausführungsform kann als Abstands-Information insbesondere eine Information über den Schweißstrom verwendet werden, beispielsweise dessen Betrag oder dessen Änderung gegenüber einem vorgegebenen Referenzwert. Es hat sich gezeigt, dass ein sinkender Schweißstrom eine Vergrößerung der Überstandslänge und damit des Brennerabstands anzeigt und umgekehrt, so dass der Schweißstrom oder dessen Änderung einen Rückschluss auf den Brennerabstand oder dessen Änderung erlaubt.

Bei einer Ausführungsform ist die Steuereinrichtung dazu eingerichtet ist, die aktuellen Schweiß- oder Lötparameter von der Stromquelle und/oder von einem etwaig verwendeten Drahtvorschubgerät zu erhalten. Auf diese Weise ist keine gesonderte Erfassung der Schweiß- oder Lötparameter erforderlich, da diese in der Stromquelle und/oder dem etwaig verwendeten Drahtvorschubgerät ohnehin erfasst werden oder als Sollwerte einer Regelung vorgegeben sind.

Bei einer Ausführungsform ist die Steuereinrichtung dazu eingerichtet, ein Brennertastersignal über das Betätigen eines Brennertasters eines im Betrieb an die Anschlussmittel angeschlossenen Brenners zu erhalten und bei Erhalt des Brennertastersignals die Absaugeinrichtung einzuschalten oder deren Absaugleistung für einen Leistungsbetrieb zu erhöhen. Auf diese Weise kann der Nutzer die Absaugeinrichtung manuell starten oder von einem Leerlaufbetrieb mit geringer Drehzahl auf einen Leistungsbetrieb umschalten, bevor er, insbesondere mittels erneuter Betätigung des Brennertasters, mit dem Schweißen bzw. Löten beginnt. Auf diese Weise beginnt der Betrieb bzw. Leistungsbetrieb der Absaugeinrichtung bereits vor Beginn des eigentlichen Schweiß- oder Lötvorgangs, so dass sich der für die gewünschte Absaugströmung erforderliche Unterdruck aufbauen kann und beim anschließenden Beginn eines Schweiß- oder Lötvorgangs die erforderliche Absaugströmung unmittelbar zur Verfügung steht. Zu diesem Zweck kann die Steuereinrichtung vorzugsweise dazu eingerichtet sein, bei Erhalt eines ersten Brennertastersignals die Absaugeinrichtung einzuschalten oder deren Absaugleistung für einen Leistungsbetrieb zu erhöhen und bei Erhalt eines nachfolgenden zweiten Brennertastersignals den Beginn eines Schweiß- und/oder Lötvorgangs zu bewirken.

Bei einer Ausführungsform umfassen die Anschlussmittel einen Absauganschluss zum Anschließen einer Absaugleitung eines an die Anschlussmittel angeschlossenen Brenners. Umfasst die Vorrichtung eine Stromquelle zur Bereitstellung eines Schweiß- oder Lötstroms, so kann die Absaugeinrichtung beispielsweise in die Stromquelle integriert und der Absauganschluss an der Stromquelle angeordnet sein. Ist die Absaugeinrichtung als gesondertes Gerät ausgebildet, so kann der Absauganschluss insbesondere direkt an der Absaugeinrichtung angeordnet sein.

An eine solche Vorrichtung mit einem Absauganschluss kann zum Beispiel ein Brenner angeschlossen werden, dessen Schlauchpaket mehrere Anschlüsse aufweist, insbesondere einen Anschluss zum Anschließen des Schlauchpakets an einen Brenneranschluss eines Drahtvorschubgeräts und einen weiteren Anschluss zum Anschließen des Schlauchpakets an den Absauganschluss.

Bei einer Ausführungsform weist die Vorrichtung eine Stromquelle zur Bereitstellung eines Schweiß- oder Lötstroms auf. Die Absaugeinrichtung kann beispielsweise in die Stromquelle integriert sein.

Bei einer Ausführungsform umfasst die Vorrichtung ein Drahtvorschubgerät und die Anschlussmittel umfassen einen Brenneranschluss am Drahtvorschubgerät. Der Brenneranschluss dient insbesondere zur Bereitstellung des mit dem Drahtvorschubgerät geförderten Schweiß- oder Lötdrahts. Weiterhin kann der Brenneranschluss zur Bereitstellung eines Schutzgasstroms ausgebildet sein. Weiterhin kann der Brenneranschluss zur Bereitstellung des von der Schweißstromquelle bereitgestellten Schweiß- oder Lötstroms eingerichtet sein.

Das Drahtvorschubgerät weist vorzugsweise eine Steuereinheit auf. Beispielsweise kann die Steuereinrichtung der Vorrichtung durch die Steuereinheit des Drahtvorschubgeräts gebildet werden oder diese umfassen. Insbesondere kann die Steuereinheit des Drahtvorschubgeräts mit der Absaugeinrichtung, insbesondere einer Steuereinrichtung der Absaugeinrichtung über eine Datenverbindung verbunden sein.

Bei einer Ausführungsform ist die Steuereinrichtung dazu eingerichtet, die Absaugleistung zu Beginn des Betriebs oder Leistungsbetriebs der Absaugeinrichtung zunächst auf einen Start-Absaugleistungswert einzustellen und danach abzusenken. Auf diese Weise wird die Absaugeinrichtung zunächst mit hoher Start-Absaugleistung betrieben, um den für die Bereitstellung des Absaugluftstroms erforderlichen Unterdruck schneller aufzubauen zu können. Dadurch kann die Zeitspanne zwischen dem Start der Absaugeinrichtung bzw. dem Beginn des Leistungsbetriebs der Absaugeinrichtung und dem Erreichen der gewünschten Absaugleistung bzw. des gewünschten Absaugluftstroms verkürzt werden. Die Start-Absaugleistung kann insbesondere unabhängig von der einer Abstands-Information eingestellt werden. Beispielsweise kann die Steuereinrichtung dazu eingerichtet sein, die Absaugeinrichtung für eine bestimmte Zeitdauer mit dem Start-Absaugleistungswert zu betreiben, bevor die Absaugleistung abgesenkt wird.

Das Absenken der Absaugleistung erfolgt vorzugsweise auf eine Soll-Absaugleistung bzw. einen Soll-Absaugluftstrom, der abhängig von der Abstands-Information eingestellt wird. Insbesondere kann die Steuereinrichtung hierzu eingerichtet sein.

Weitere Vorteile und Merkmale der Vorrichtung, des Systems und des Verfahren ergeben sich aus der nachfolgenden Beschreibung von Ausführungsbeispielen, wobei Bezug auf die beigefügte Zeichnung genommen wird.

In der Zeichnung zeigen
- .Fig. 1a-c: ein Ausführungsbeispiel der Vorrichtung und des Systems,
- Fig. 2: das Ausführungsbeispiel aus Fig. 1a-c in abstrahierter Darstellung,
- Fig. 3: Beispiele zur Bestimmung des Absaugluftstroms abhängig vom Brennerabstand bzw. vom Abstand *L₀,*
- Fig. 4a-b: ein Beispiel für die Steuerung der Vorrichtung aus Fig. 1a-c oder 5,
- Fig. 5: ein weiteres Ausführungsbeispiel der Vorrichtung und des Systems und
- Fig. 6: das Ausführungsbeispiel aus Fig. 5 in abstrahierter Darstellung.

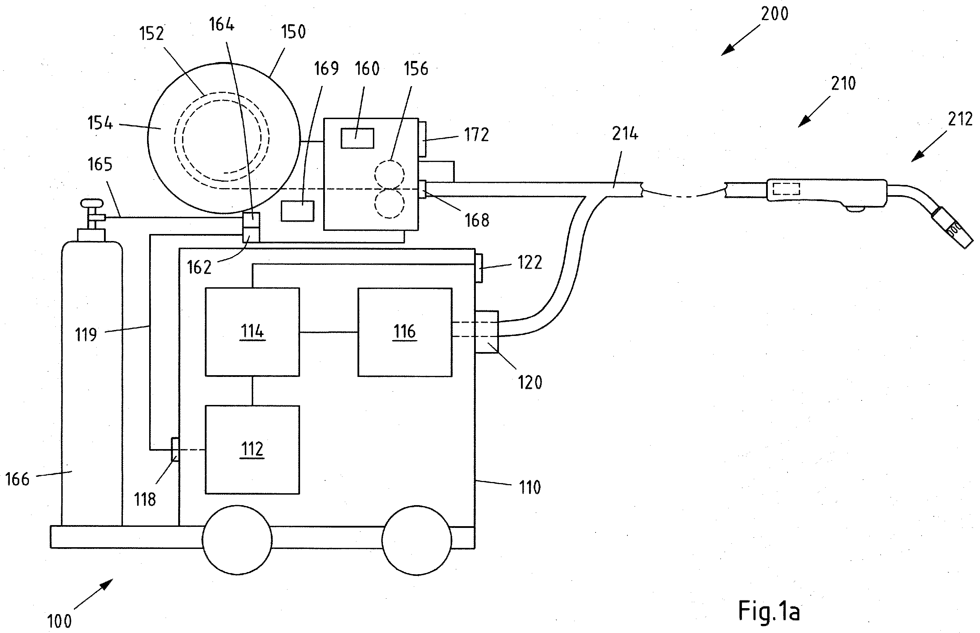

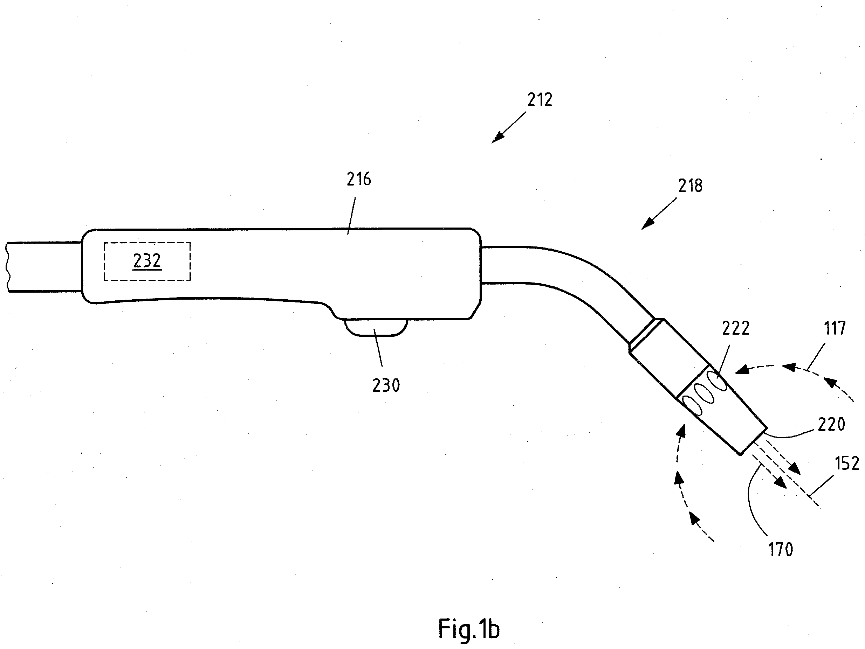

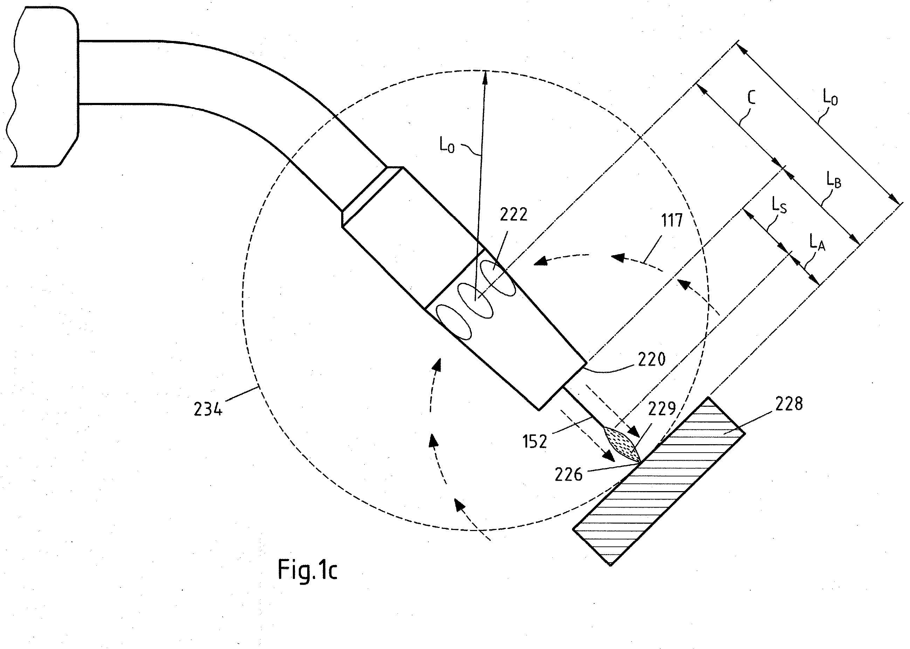

Die Fig. 1a-c zeigen ein Ausführungsbeispiel der Vorrichtung und des Systems in schematischer Darstellung. Fig. 1a zeigt eine schematische Ansicht der Vorrichtung 100 und des Systems 200. Fig. 1b zeigt eine schematische Detailansicht aus Fig. 1a. Fig. 1c zeigt den Schweißbrenner aus Fig. 1b während eines laufenden Schweißvorgangs an einem Werkstück.

Die Vorrichtung 100 ist im vorliegenden Ausführungsbeispiel als Vorrichtung zum Schweißen ausgebildet und wird im Folgenden entsprechend beschrieben. Alternativ ist es auch denkbar, die Vorrichtung 100 in entsprechender Weise als Vorrichtung zum Löten auszubilden.

Weiterhin ist die Vorrichtung 100 im vorliegenden Ausführungsbeispiel zum Metallschutzgas-(MSG)-schweißen ausgebildet, beispielsweise zum Metallinertgas-(MIG)- oder zum Metallaktivgas-(MAG)-Schweißen. Die Vorrichtung 100 könnte alternativ aber auch zum Einsatz beim WIG-Schweißen oder Plasmaschweißen ausgebildet sein.

Die Vorrichtung 100 umfasst eine Schweißstromquelle 110 zur Bereitstellung eines Schweißstroms mit einem Leistungsteil 112, einer Steuereinheit 114 und einer Absaugeinrichtung 116. Die Steuereinheit 114 ist zur Steuerung der Schweißstromquelle 110 eingerichtet und steuert insbesondere das Leistungsteil 112 und die Absaugeinrichtung 116. Das Leistungsteil 112 ist dazu eingerichtet, einen Schweißstrom zum Schweißen über einen elektrischen Ausgang 118 der Schweißstromquelle 110 bereitzustellen. Weiterhin weist die Schweißstromquelle 110 einen Absauganschluss 120 für eine Absaugleitung auf, wobei die Absaugeinrichtung 116 dazu eingerichtet ist, einen Unterdruck bzw. Absaugluftstrom über den Absauganschluss 120 bereitzustellen.

Die Vorrichtung 100 umfasst weiter ein Drahtvorschubgerät 150 zum Transport eines Schweißdrahts 152. Das Drahtvorschubgerät 150 weist einen Schweißdrahtvorrat 154 in Form einer Schweißdrahttrommel, eine Schweißdrahtfördereinrichtung 156, die vorzugsweise angetriebene Rollen zur kontrollierten Förderung des Schweißdrahts 152 umfasst, und eine Steuereinheit 160, die zur Steuerung des Drahtvorschubgeräts 150 ausgebildet ist, auf.

Das Drahtvorschubgerät 150 weist weiter einen elektrischen Eingang 162 zum Einspeisen des von der Schweißstromquelle 110 bereitgestellten Schweißstroms auf, der für den Betrieb über eine elektrische Leitung 119 mit dem elektrischen Ausgang 118 der Schweißstromquelle verbunden wird. Weiter weist das Drahtvorschubgerät 150 einen Schutzgas-Einlass 164 zum Einspeisen eines Schutzgases auf, der für den Betrieb über eine Gasleitung 165 mit einer Schutzgasquelle 166, wie zum Beispiel einer Gasflasche, verbunden wird.

Das Drahtvorschubgerät 150 weist weiter einen Brenneranschluss 168 zum Anschließen eines Schweißbrenners 210 auf. Über den Brenneranschluss 168 werden der von der Schweißdrahtfördereinrichtung 156 geförderte Schweißdraht 152, der von der Schweißstromquelle 110 bereitgestellte Schweißstrom und das von der Schutzgasquelle 166 bereitgestellte Schutzgas für den Schweißbrenner 210 bereitgestellt.

Die Steuereinheit 160 ist insbesondere zur Steuerung der Schweißdrahtfördereinrichtung 156 eingerichtet. Weiterhin kann die Steuereinheit 160 dazu eingerichtet sein, den am Brenneranschluss 168 bereitgestellten Schutzgasstrom zu steuern. Zu diesem Zweck kann das Drahtvorschubgerät 150 zwischen dem Schutzgas-Einlass 164 und dem Brenneranschluss 168 zum Beispiel ein steuerbares Ventil 169 aufweisen, mit dem sich der Schutzgasstrom einstellen lässt.

Die Steuereinheit 114 der Schweißstromquelle 110 und die Steuereinheit 160 des Drahtvorschubgeräts 150 sind vorzugsweise über eine Kommunikationsverbindung miteinander verbunden, zum Beispiel über die Leitung 119 oder über eine gesonderte Datenleitung, so dass eine der beiden Steuereinheiten 114, 160 Steuerbefehle an die jeweilige andere der beiden Steuereinheiten 114, 160 übertragen kann. Auf diese Weise kann beispielsweise die Steuereinheit 114 dazu eingerichtet sein, sowohl die Schweißstromquelle 110 als auch das Drahtvorschubgerät 150 zu steuern. Die Steuereinheit 114 und die Steuereinheit 160 bilden gemeinsam eine Steuereinrichtung 190 der Vorrichtung 100.

An der Schweißstromquelle 110 und/oder an dem Drahtvorschubgerät 150 ist vorzugsweise eine jeweilige Nutzerschnittstelle 122, 172 vorgesehen, über die der Nutzer Betriebsinformationen ablesen und/oder Steuerbefehle eingeben kann.

Das System 200 umfasst die Vorrichtung 100 und einen an das System 200 angeschlossenen Schweißbrenner 210. Der Schweißbrenner 210 weist ein Brennerteil 212 und ein Schlauchpaket 214 auf, mit dem das Brennerteil 212 an die Vorrichtung 100 angeschlossen ist. Fig. 1b zeigt eine schematische Detailansicht des Brennerteils 212.

Das Schlauchpaket 214 ist an den Brenneranschluss 168 des Drahtvorschubgeräts 150 angeschlossen, so dass im Betrieb der von der Schweißdrahtfördereinrichtung 156 geförderte Schweißdraht 152 über den Brenneranschluss 168 durch eine durch das Schlauchpaket 214 verlaufende Hohlleitung zum Brennerteil 212 geführt wird und weiter der von der Schweißstromquelle 110 bereitgestellte und durch das Drahtvorschubgerät 150 geschleifte Schweißstrom über den Brenneranschluss 168 durch eine durch das Schlauchpaket 214 verlaufende elektrische Leitung zum Brennerteil 212 geleitet wird, wo der Schweißstrom über eine Kontaktierung, zum Beispiel über ein Kontaktrohr, durch das der Schweißdraht 152 geführt wird, auf den Schweißdraht 152 geleitet wird. Weiterhin wird im Betrieb der am Brenneranschluss 168 bereitgestellte Schutzgasstrom durch eine durch das Schlauchpaket 214 verlaufende Schutzgasleitung zum Brennerteil 212 geleitet, um dort einen Schutzgasmantel für den Schweißvorgang zu erzeugen.

Das Schlauchpaket 214 ist weiterhin über eine Abzweigung an den Absauganschluss 120 der Schweißstromquelle 110 angeschlossen, so dass im Betrieb ein von der Absaugeinrichtung 116 bewirkter Absaugluftstrom über eine durch das Schlauchpaket 214 verlaufende Absaugleitung am Brennerteil 212 bereitgestellt werden kann.

Der Brenneranschluss 168 des Drahtvorschubgeräts 150 und der Absauganschluss 120 der Schweißstromquelle bilden zusammen Anschlussmittel 180 der Vorrichtung 100 zum Anschluss des Brenners 210.

Das Brennerteil 212 umfasst einen Handgriff 216 und einen Brennerkopf 218 mit einer Öffnung 220 am vorderen Ende des Brenners 210, aus dem im Betrieb der mit dem Schweißstrom beaufschlagte Schweißdraht 152 herausgeführt wird und der Schutzgasstrom 170 austritt.

Der Brennerkopf 218 weist weiterhin Absaugöffnungen 222 auf, die im vorliegenden Beispiel um einen Abstand C gegenüber der Öffnung 220 zurückversetzt sind und die über das Schlauchpaket 214 und den Absauganschluss 120 mit der Absaugeinrichtung 116 verbunden sind, so dass im Betrieb ein Absaugluftstrom 117 am Brennerkopf 218 bereitgestellt wird, mit dem beim Schweißen an der Schweißstelle 226 auf dem Werkstück 228 entstehende Rauchgase durch den Brennerkopf 218 abgesaugt werden.

Am Handgriff 216 des Brennerteils 212 ist ein Brennertaster 230 vorgesehen. Bei einfachen Schweißbrennern sind die Anschlusspole des Brennertasters über zwei durch das Schlauchpaket 214 verlaufende elektrische Brennertaster-Leitungen mit entsprechenden Kontakten am Brenneranschluss 168 verbunden, so dass die Steuereinrichtung 190 die Betätigung des Brennertasters 230 feststellen und zum Beispiel bei Betätigung des Brennertasters 230 einen Schweißvorgang starten kann. Bei technisch weiter entwickelten Schweißbrennern mit einer eigenen Brennersteuereinheit 232 kann der Brennertaster zusätzlich oder alternativ mit der Brennersteuereinheit 232 verbunden sein. Die Brennersteuereinheit 232 kann über die Brennertaster-Leitungen und/oder über gesonderte durch das Schlauchpaket verlaufende Datenleitungen und Kontakte am Brenneranschluss 168 oder Absauganschluss 120 mit der Steuereinrichtung 190 verbunden sein. Mittels der Brennersteuereinheit 232 können zum Beispiel Schweißparameter wie der Schweißstrom direkt am Schweißbrenner 210 eingestellt werden. Die Brennersteuereinheit 232 kann auch dazu eingerichtet sein, eine Information über den Brennertyp des Brenners 210 an die Steuereinrichtung 190 zu übermitteln.

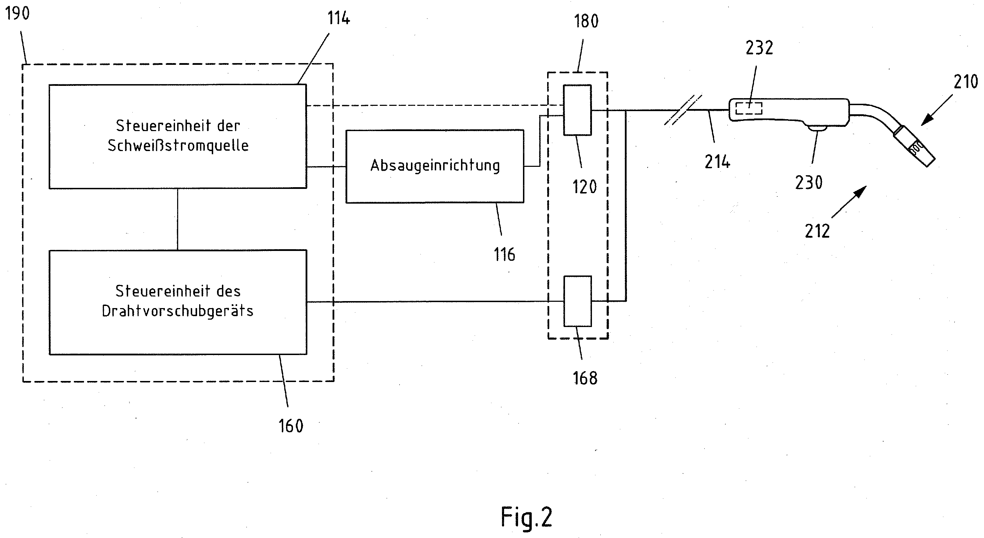

Fig. 2 zeigt eine abstrahierte Darstellung der Vorrichtung 100. Im Einzelnen zeigt Fig. 2 die Steuereinheit 114 der Schweißstromquelle 110, die mit der Steuereinheit 114 verbundene Absaugeinrichtung 116 sowie den Absauganschluss 120, an den der Schweißbrenner 210 angeschlossen ist. Weiterhin zeigt Fig. 2 die Steuereinheit 160 des Drahtvorschubgeräts 150 sowie den Brenneranschluss 168, an den der Schweißbrenner 210 ebenfalls angeschlossen ist. Der Absauganschluss 120 und der Brenneranschluss 168 bilden gemeinsam die Anschlussmittel 180 der Vorrichtung 100 für den Schweißbrenner 210. Die Steuereinheiten 114 und 160 bilden gemeinsam die Steuereinrichtung 190 der Vorrichtung 100.

Die Steuereinrichtung 190 ist dazu eingerichtet, eine Abstands-Information über den Brennerabstand des an die Anschlussmittel angeschlossenen Brenners 210 zur Schweißstelle 226 zu erhalten und die Absaugeinrichtung 116 abhängig von der ermittelten Abstands-Information zu steuern. Dies wird nachfolgend im Einzelnen erläutert.

Fig. 1c zeigt den Schweißbrenner 210 während eines laufenden Schweißvorgangs an einem Werkstück 228. Bei dem Schweißvorgang wird der Schweißdraht 152 durch das Drahtvorschubgerät 150 gefördert und tritt aus der Öffnung 220 des Brennerkopfs 218 aus. Die Länge des freien Schweißdrahts 152 außerhalb des Brenners 210, d.h. die Überstandlänge bzw. der Stickout, ist in Fig. 1b mit *L_{S}* bezeichnet.

Zwischen der Spitze des Schweißdrahts 152 und der Schweißstelle 226 auf dem Werkstück 228 brennt während des Schweißvorgangs der Schweißlichtbogen 229 mit einer Lichtbogenlänge *L_{A}*.

Der Brennerabstand *L_{B}* ergibt sich in diesem Beispiel als Summe der Lichtbogenlänge *L_{A}* und der Überstandslänge *L_{S}:* ${L}_{B} = {L}_{A} + {L}_{S} .$

Weiterhin ergibt sich der Abstand *L_{O}* zwischen den Absaugöffnungen 222 und der Schweißstelle 226 als Summe aus *L_{B}* und *C*: ${L}_{0} = {L}_{B} + C .$

Die Steuereinrichtung 190 ist dazu eingerichtet eine Abstands-Information über den Brennerabstand *L_{B}* des an die Anschlussmittel 180 angeschlossenen Brenners 210 zur Schweißstelle 226 zu erhalten. Zu diesem Zweck ist die Steuereinrichtung 190, insbesondere die Steuereinheit 114, dazu eingerichtet, aktuelle Schweißparameter zu erhalten wie den Schweißstrom *I_{S},* die von der Schweißstromquelle 110 bereitgestellte Schweißspannung *U_{S}* und/oder die Drahtvorschubgeschwindigkeit *v_{D}.* Beispielsweise kann die Steuereinheit 114 den aktuellen Schweißstrom und die aktuelle Schweißspannung von einem Strom- bzw. Spannungsmessschaltkreis der Schweißstromquelle 110 erhalten. Alternativ kann die Steuereinheit 114 bei einer Spannungs- oder Stromregelung auch den aktuellen Sollwert für die Schweißspannung bzw. den Schweißstrom verwenden. Die aktuelle Drahtvorschubgerschwindigkeit kann zum Beispiel von der Steuereinheit 160 an die Steuereinheit 114 übermittelt werden.

Die Steuereinrichtung 190, insbesondere die Steuereinheit 114, ist weiter dazu eingerichtet, aus den erhaltenen aktuellen Schweißparametern die Abstands-Information zu bestimmen. Dies kann zum Beispiel wie folgt durchgeführt werden:
Die Steuereinrichtung 190 kann zum Beispiel dazu eingerichtet sein, während des Schweißvorgangs eine Schweißspannungsregelung durchzuführen, insbesondere derart, dass der Spannungsabfall *U_{B}* über den aus dem Schweißbrenner 210 hervorstehenden (überstehenden) Schweißdraht und den Lichtbogen konstant gehalten wird. *U_{B}* lässt sich zum Beispiel durch folgende Formel bestimmen: ${U}_{B} = {U}_{S} - {R}_{S}^{Rest} ⋅ {I}_{S} ,$ wobei *U_{S}* die von der Schweißstromquelle bereitgestellte Spannung, *I_{S}* der Schweißstrom und ${R}_{S}^{Rest}$ der elektrische Widerstand aller Komponenten im Schweißstromkreis mit Ausnahme der (typischerweise unbekannten) elektrischen Widerstände des überstehenden Schweißdrahts und des Lichtbogens ist. Die Regelung von *U_{B}* auf einen konstanten Wert erfolgt insbesondere durch Anpassung des Schweißstroms *I_{S}*. Eine solche Regelung bewirkt, dass die Lichtbogenlänge *L_{A}* konstant gehalten wird, es handelt sich also um eine Lichtbogenlängenregelung.

Verringert sich bei einer solchen Lichtbogenlängenregelung der Abstand *L_{B},* so verringert sich entsprechend die Überstandslänge *L_{S}*, da *L_{A}* bei der Regelung im Wesentlichen konstant gehalten wird. Bei einer Verringerung der Überstandslänge *L_{S}* verkürzt sich die Dauer des (Wärme-)Energieeintrags in einen Schweißdrahtabschnitt während dessen Förderung entlang der Überstandslänge *L_{S}.* Entsprechend muss der Schweißstrom *I_{S}* und damit die in diesen Schweißdrahtabschnitt eingebrachte Wärmeleistung erhöht werden, damit bis zum Ende der Überstandslänge *L_{S}* die zum Aufschmelzen des Schweißdrahtabschnitts erforderliche Wärmeenergie eingebracht wird. Umgekehrt muss der Schweißstrom *I_{S}* reduziert werden, wenn sich bei der Lichtbogenlängenregelung der Abstand *L_{B}* und damit die Überstandslänge *L_{S}* erhöht, damit die zum Aufschmelzen des Schweißdrahtabschnitts erforderliche Wärmeenergie nicht schon vor Erreichen der Überstandslänge *L_{S}* in den Schweißdrahtabschnitt eingebracht wird.

Damit kann der Schweißstrom *I_{S}* bzw. dessen Änderung von einem Ausgangswert als Indikator für eine Änderung des Abstands *L_{B}* verwendet werden, um die Absaugeinrichtung abhängig von einer Abstands-Information über den Brennerabstand *L_{B}* zu steuern. Insbesondere kann die Steuereinrichtung dazu eingerichtet sein, den Wert von *I_{S}* oder die Differenz von *I_{S}* und einem Referenzwert ${I}_{S}^{Ref}$ als Abstands-Information über den Brennerabstand zu erhalten und zur Steuerung der Absaugeinrichtung zu verwenden. Die Abstands-Information gibt in diesem Fall eine relative Änderung des Abstands *L_{B}* an.

Es ist weiterhin denkbar, dass die Steuereinrichtung als Abstands-Information über den Brennerabstand einen Wert für die absolute Größe des Brennerabstands *L_{B}* bestimmt. Zu diesem Zweck können zum Beispiel in einem Datenspeicher der Steuereinrichtung Referenzwerte von Schweißparametern mit jeweils zugeordneten Werten für den Brennerabstand *L_{B}* hinterlegt sein. Beispielsweise kann für typische Drahtvorschubgeschwindigkeiten (z.B. *v_{D} =* 5 m/min, 10 m/min und 15 m/min) und bestimmte Sollwerte für *U_{B}* der jeweilige Zusammenhang von *I_{S}* und *L_{B}* im Vorhinein gemessen und auf dem Datenspeicher der Steuereinrichtung gespeichert werden. Im Betrieb kann dann ein den aktuellen Schweißparametern *V_{D}, U_{B}* und *I_{S}* zugeordneter Brennerabstand *L_{B}* anhand der im Datenspeicher gespeicherten Daten bestimmt und als Abstands-Information über den Brennerabstand verwendet werden.

Der Abstand *C* kann beispielsweise ebenfalls in einem Datenspeicher der Steuereinrichtung 190 hinterlegt sein. Es ist zum Beispiel denkbar, dass in einem solchen Datenspeicher für verschiedene Brennertypen der jeweilige Abstand *C* gespeichert ist und die Steuereinrichtung 190 dazu eingerichtet ist, eine Brennertyp-Information zu erhalten, beispielsweise vom Schweißbrenner 210 selbst oder über die Nutzerschnittstelle 122, und den Abstand *C* abhängig von der Brennertyp-Information aus dem Datenspeicher auszulesen.

Mittels des bestimmten Brennerabstands *L_{B}* und des erhaltenen Abstands *C* kann die Steuereinrichtung 190 dann z.B. den Abstand *L_{O}* mit der Formel (2) berechnen und *L_{B}* oder *L_{O}* als Abstands-Information für den Brennerabstand verwenden.

Die Steuereinrichtung 190 ist weiter dazu eingerichtet, die Absaugeinrichtung 116 abhängig von der ermittelten Abstands-Information zu steuern. Zu diesem Zweck kann die Steuereinrichtung 190 dazu eingerichtet sein, mittels einer vorgegebenen Berechnungsvorschrift abhängig von der ermittelten Abstands-Information einen zugehörigen Absaugleistungswert der Absaugeinrichtung 116 zu bestimmen, beispielsweise einen zugehörigen Volumenstrom V. Der Volumenstrom V kann beispielsweise durch Ansteuerung der Geschwindigkeit eines Ventilators der Absaugeinrichtung 116 eingestellt oder auch geregelt werden.

Wird beispielsweise bei einer Lichtbogenlängenregelung wie zuvor beschrieben *I_{S}* bzw. ${ΔI}_{S} = {I}_{S} - {I}_{S}^{Ref}$ als Abstands-Information über den Brennerabstand verwendet, so kann der Volumenstrom V beispielsweise anhand einer vorgegebenen Funktion V̇(*I_{S}*) bzw. *V̇*(*ΔI_{S}*) eingestellt werden. Ein Beispiel für eine solche Funktion ist $\dot{V} \left({ΔI}_{S}\right) = {\dot{V}}_{0} - k ⋅ {ΔI}_{S} ,$ wobei *V̇₀* ein vorgegebener Referenzvolumenstrom, und k eine vorgegebene Konstante (mit Einheit: m³/(A h)) ist. Bei Verwendung dieser Funktion ergibt sich bei einer Erhöhung von *I_{S}* bzw. *ΔI_{S}* als Indikator für einen geringeren Brennerabstand *L_{B}* ein geringerer Volumenstrom und umgekehrt.

Wird wie weiter zuvor beschrieben ein Wert für *L_{B}* als Abstands-Information über den Brennerabstand verwendet, so kann der Volumenstrom V beispielsweise anhand einer vorgegebenen Funktion *V̇*(*L_{B}*) eingestellt werden. Eine geeignete Berechnungsvorschrift zur Bestimmung des Volumenstroms V als Funktion des Brennerabstands *L_{B}* bzw. des Abstands *L_{O}* stellt zum Beispiel die folgende Formel dar: $\dot{V} \left({L}_{B}\right) = 4 ⋅ π ⋅ ν ⋅ {{L}_{0}}^{2} = 4 ⋅ π ⋅ ν ⋅ {\left({L}_{B}+C\right)}^{2} ,$ wobei v eine vorgegebene Luftgeschwindigkeit des Absaugluftstroms am Ort der Schweißrauchentstehung, d.h. an der Schweißstelle 226, ist. Der Wert von v kann zum Beispiel in einem Datenspeicher der Steuereinrichtung 190 hinterlegt sein.

Die Formel (5) ergibt sich aus der Annahme eines näherungsweise kugelförmigen Saugfelds 234 um die Absaugöffnungen 222, d.h. eines Saugfelds, dessen Luftgeschwindigkeiten mit dem Abstand zu den Absaugöffnungen 222 in verschiedene Richtungen näherungsweise gleichmäßig abnehmen, so dass die Luftgeschwindigkeiten auf einer Kugeloberfläche um die Absaugöffnungen 222 näherungsweise betragsmäßig gleich sind.

Die Entstehungsstelle des Schweißrauchs, d.h. die Schweißstelle 226, liegt damit auf der Oberfläche einer Kugel um die Absaugöffnungen 222 mit einem Radius, die dem vom Brennerabstand *L_{B}* abhängigen Abstand *L_{O}* entspricht. Diese Kugel weist entsprechend eine Oberfläche *O* = 4π*L₀*² auf, so dass sich mit einer vorgegebenen Luftgeschwindigkeit v an der Schweißstelle 226 zum Absaugen des entstehenden Schweißrauchs der erforderliche (gesamte) Absaug-Volumenluftstrom V durch die Absaugöffnungen 222 mit der Formel (2) abhängig vom Abstand *L₀* bzw. vom Brennerabstand *L_{B}* berechnen lässt.

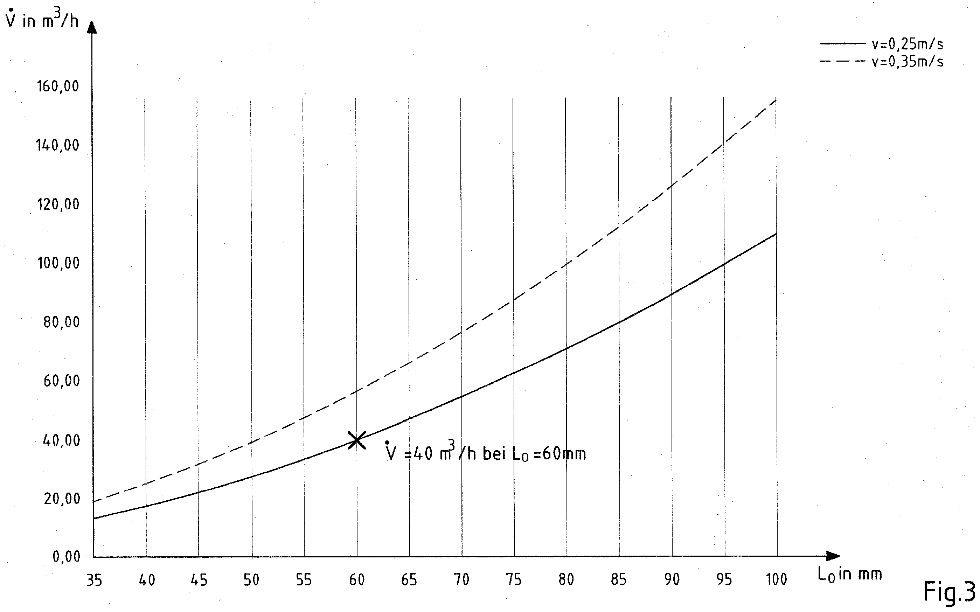

Fig. 3 zeigt ein Diagramm, in dem der Zusammenhang von Volumenstrom V (in m³/h) und dem Abstand *L₀* (in mm) entsprechend der obigen Formel (5) für zwei vorgegebene Luftgeschwindigkeiten v = 0,25 m/s und v = 0,35 m/s aufgetragen ist. Bei einer vorgegebenen Luftgeschwindigkeit v = 0,25 m/s ergibt sich bei einem Abstand *L₀ =* 60 mm zum Beispiel ein Volumenstrom von ca. 40 m³/h.

Durch die Einstellung des Absaugluftstroms V abhängig von der Abstands-Information über den Brennerabstand *L_{B},* zum Beispiel abhängig von *L_{B},* von *L₀* oder von *I_{S},* lässt sich somit auch bei variierendem Brennerabstand *L_{B}* eine gleichbleibend zuverlässige Absaugung des Schweißrauchs erreichen, während gleichzeitig verhindert wird, dass der Schutzgasmantel des aus der Öffnung 220 des Schweißbrenners 210 ausströmenden Schutzgasstroms 170 durch die Rauchabsaugung destabilisiert wird.

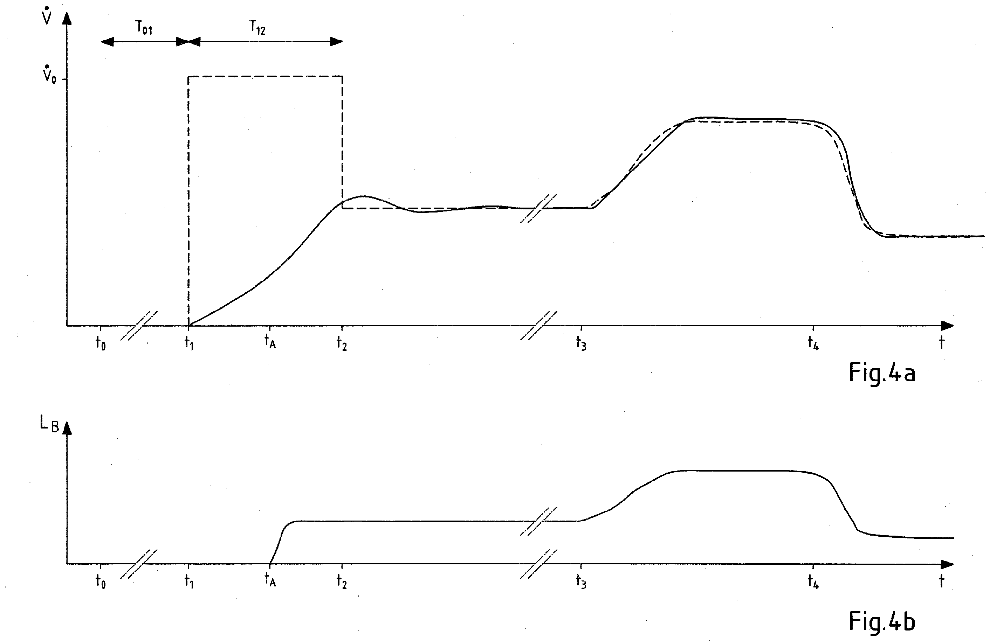

Die Fig. 4a-b illustrieren ein Beispiel einer möglichen Steuerung der Absaugeinrichtung 116 durch die Steuereinrichtung 190. Bei dem Diagramm in Fig. 4a ist auf der Abszisse die Zeit t und auf der Ordinate der Volumenstrom V aufgetragen. Die gestrichelte Linie zeigt den von der Steuereinrichtung 190 an der Absaugeinrichtung 116 eingestellten Volumenstrom (Soll-Wert). Die durchgezogene Linie zeigt den tatsächlichen Volumenstrom (Ist-Wert). Das Diagramm in Fig. 4b zeigt auf der Abszisse wiederum die Zeit t und auf der Ordinate die Abstands-Information über den ermittelten Brennerabstand *L_{B}.* In Fig. 4b ist beispielhaft *L_{B}* selbst als Abstands-Information eingezeichnet; stattdessen kommt aber auch eine andere geeignete Abstands-Information (z.B. *L₀, I_{S}, ΔI_{S}, ΔL_{B}*) in Frage.

Zum Zeitpunkt t₀ ist der an den Anschlussmitteln 180 angeschlossene Schweißbrenner 210 nicht in Betrieb und hängt zum Beispiel mit dem Schlauchpaket über einer an der Schweißstromquelle 110 oder am Drahtvorschubgerät 150 vorgesehenen Halterung. Die Absaugeinrichtung 116 ist zu diesem Zeitpunkt ausgeschaltet oder in einem Leerlaufbetrieb (V = 0). Ein Brennerabstand *L_{B}* wird zu diesem Zeitpunkt nicht ermittelt, da kein Schweißlichtbogen brennt.

Zum Zeitpunkt t₁, dem Startzeitpunkt des Schweißvorgangs, erhält die Steuereinrichtung 190 vom Schweißbrenner 210 ein Brennertastersignal über die Betätigung des Brennertasters 230. Die Steuereinrichtung 190 ist dazu eingerichtet, beim Erhalt des Brennertastersignals die Absaugeinrichtung 116 einzuschalten, wenn diese noch ausgeschaltet ist. Weiterhin ist die Steuereinrichtung 190 im vorliegenden Beispiel dazu eingerichtet, die Absaugleistung der Absaugeinrichtung 116 zunächst für eine Zeitdauer T₁₂ auf einen Start-Absaugleistungswert einzustellen, in Fig. 4 als Start-Volumenstromwert V̇₀ angegeben, bevor die Absaugleistung zum Zeitpunkt t₂ abgesenkt wird und die Steuereinrichtung den Soll-Volumenstromwert V ab diesem Zeitpunkt in Abhängigkeit der erhaltenen Abstands-Information, zum Beispiel *L_{B}* oder *L_{O}* oder *I_{S}* oder Δ*I_{S},* über den Brennerabstand L_{B} ermittelt und die Absaugeinrichtung 116 entsprechend einstellt.

Die Ermittelung der Abstands-Information über den Brennerabstand *L_{B}* durch die Steuereinrichtung 190 beginnt zu einem Zeitpunkt t_{A}, nachdem der Lichtbogen gezündet wurde.

In dem Beispiel in Fig. 4a-b hält der Schweißer den Abstand zwischen Brenner 210 und Werkstück 228 zunächst konstant, so dass der Soll-Volumenstromwert V ebenfalls konstant bleibt. Ab dem Zeitpunkt t₃ erhöht der Schweißer den Abstand zwischen Brenner 210 und Werkstück 228, so dass die Steuereinrichtung 190 zum Beispiel entsprechend der Formel (4) oder (5) einen größeren Soll-Volumenstromwert V bestimmt und die Absaugeinrichtung 116 entsprechend steuert. Beispielsweise kann zur Anpassung des Volumenstroms der Absaugeinrichtung 116 die Drehzahl eines Rotors der Absaugeinrichtung 116 entsprechend gesteuert werden. Ab dem Zeitpunkt t₄ reduziert der Schweißer den Abstand zwischen Brenner 210 und Werkstück 228 wieder. Durch die beschriebene Steuerung wird der Volumentstrom der Absaugeinrichtung 116 automatisch angepasst.

Durch die zuvor beschriebene Steuerung wird eine dynamische Steuerung der Absaugeinrichtung 116 abhängig von der Abstands-Information über den Brennerabstand erreicht, wodurch eine gleichbleibende Schweißqualität bei gleichzeitig zuverlässiger Absaugung des Schweißrauchs erreicht wird.

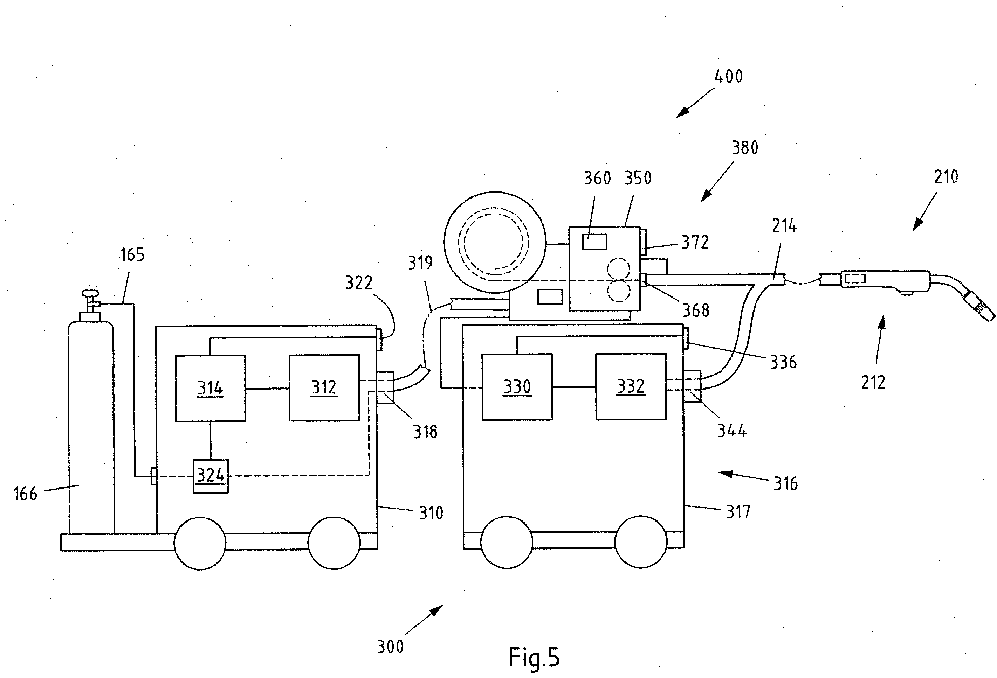

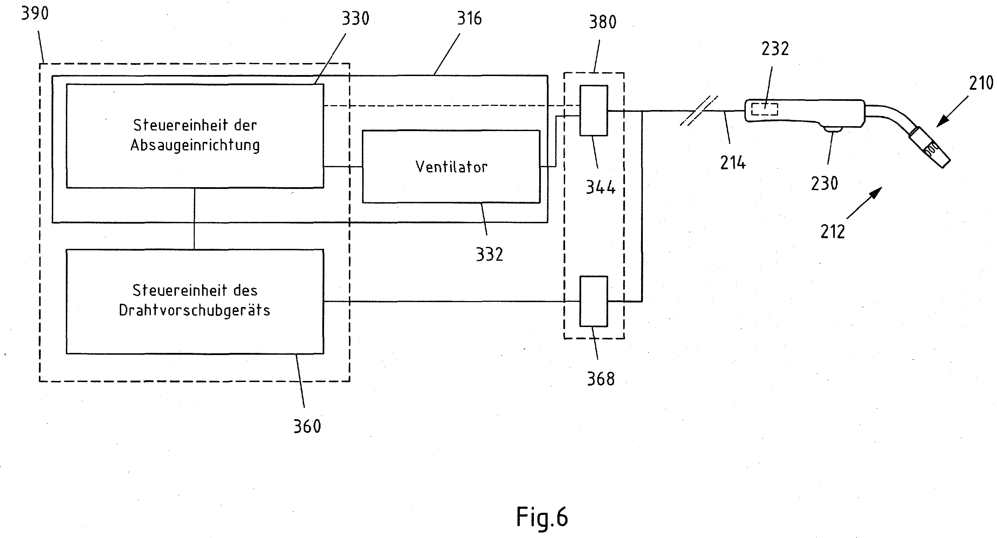

Fig. 5 zeigt ein weiteres Ausführungsbeispiel der Vorrichtung und des Systems in einer der Fig. 1a entsprechenden schematischen Darstellung. Weiterhin zeigt Fig. 6 eine der Fig. 2 entsprechende Darstellung für das weitere Ausführungsbeispiel.

Die Vorrichtung 300 und die Vorrichtung 100 weisen einen ähnlichen Aufbau und eine ähnliche Funktionsweise auf, so dass im Folgenden vor allem die Unterschieden zwischen den beiden Vorrichtungen beschrieben werden und im Übrigen auf die obige Beschreibung verwiesen wird.

Die Vorrichtung 300 ist im vorliegenden Ausführungsbeispiel als Vorrichtung zum Einsatz beim Schweißen ausgebildet und wird im Folgenden entsprechend beschrieben. Alternativ ist es auch denkbar, die Vorrichtung 300 in entsprechender Weise als Vorrichtung zum Einsatz beim Löten auszubilden.

Weiterhin ist die Vorrichtung 300 im vorliegenden Ausführungsbeispiel zum Einsatz beim Metallschutzgas-(MSG)-schweißen ausgebildet, beispielsweise zum Metallinertgas-(MIG)- oder zum Metallaktivgas-(MAG)-Schweißen. Die Vorrichtung 300 könnte alternativ aber auch zum Einsatz beim WIG-Schweißen oder Plasmaschweißen ausgebildet sein.

Die Vorrichtung 300 unterscheidet sich dadurch von der Vorrichtung 100, dass die Absaugeinrichtung 316 als von der Schweißstromquelle 310 separates Absauggerät 317 ausgebildet ist. Die Vorrichtung 300 umfasst das Absauggerät 317 sowie ein im Betrieb damit verbundenes Drahtvorschubgerät 350. Die Schweißstromquelle 310 ist vorliegend separat ausgebildet und nicht Teil der Vorrichtung 300.

Die Schweißstromquelle 310 weist wie die Schweißstromquelle 110 ein Leistungsteil 312, eine Steuereinheit 314 und eine Nutzerschnittstelle 322 auf. Weiterhin weist die Schweißstromquelle 310 einen Anschluss 318 für ein Schlauchpaket 319 zum Drahtvorschubgerät 350 auf. Über den Anschluss 318 werden der Schweißstrom vom Leistungsteil 312 sowie der durch die Schweißstromquelle 310 geleitete und zum Beispiel durch ein steuerbares Ventil 324 der Schweißstromquelle 310 gesteuerte Schutzgasstrom bereitgestellt.

Das Absauggerät 317 weist eine Steuereinheit 330, einen von der Steuereinheit 330 gesteuerten Ventilator 332 zur Erzeugung des Absaug-Volumenstroms, einen Absauganschluss 344 sowie eine Nutzerschnittstelle 336 auf. Der Schweißbrenner 210 ist über das Schlauchpaket 214 an dem Brenneranschluss 368 des Drahtvorschubgeräts 350 sowie an dem Absauganschluss 344 des Absauggeräts 317 angeschlossen. Der Brenneranschluss 368 und der Absauganschluss 344 bilden gemeinsam die Anschlussmittel 380 der Vorrichtung 300. Die Steuereinrichtung 390 der Vorrichtung 300 umfasst die Steuereinheit 330 und kann optional auch die Steuereinheit 360 des Drahtvorschubgeräts 350 umfassen.

Die Steuereinrichtung 390 ist wie die Steuereinrichtung 190 dazu eingerichtet eine Abstands-Information über den Brennerabstand L_{B} eines an die Anschlussmittel 380 angeschlossenen Brenners 210 zur Schweißstelle 226 zu erhalten. Die Ermittlung der Abstands-Information (z.B. *L_{B}, Lo* oder *I_{S}*) über den Brennerabstand *L_{B}* kann in ähnlicher Weise erfolgen, wie zuvor für die Vorrichtung 100 beschrieben ist.

Die Steuereinrichtung 390, insbesondere die Steuereinheit 330, ist weiter dazu eingerichtet, die Absaugeinrichtung 316, insbesondere den Ventilator 332, abhängig von der ermittelten Abstands-Information zu steuern. Die Steuerung der Absaugeinrichtung 316, insbesondere des Ventilators 332, abhängig von der Abstands-Information kann in ähnlicher Weise erfolgen, wie zuvor für die Vorrichtung 100 beschrieben ist.

Die Vorrichtung 300 und der daran angeschlossene Brenner 210 bilden gemeinsam das System 400.

Die Ausbildung der Absaugeinrichtung 316 als gesondertes Absauggerät 317 hat den Vorteil, dass dieses nahe am Drahtvorschubgerät 350 angeordnet werden kann, auch wenn das Drahtvorschubgerät 350 über ein langes Schlauchpaket 319 weit von der Schweißstromquelle 310 entfernt ist.

Mit den zuvor beschriebenen Vorrichtungen 100, 300, den Systemen 200, 400 und den beschrieben Verfahren lässt sich die Steuerung der Absaugung vereinfachen bzw. verbessern. Insbesondere kann die Absaugleistung automatisch abhängig von der jeweils erhaltenen Abstands-Information über den Brennerabstand L_{B} eingestellt und somit besser an diesen angepasst werden, so dass eine zuverlässige Absaugung von Abgasen, insbesondere Rauchgasen von der Schweiß- bzw. Lötstelle und bewirkt wird und gleichzeitig ein stabiler Schutzgasmantel ermöglicht wird.

Die Steuerung der Absaugeinrichtung abhängig von einer Abstands-Information über den Brennerabstand kann auch beim WIG-Schweißen eingesetzt werden. In diesem Fall kann der Brennerabstand *L_{B}* zum Beispiel als Summe der fest vorgegebenen Überstandslänge *L_{S}* der nicht-abschmelzenden (Wolfram-)Elektrode und der Lichtbogenlänge *L_{A}* berechnet werden, wobei sich die Lichtbogenlänge *L_{A}* beim WIG-Schweißen zum Beispiel mit der Formel ${L}_{A} = K ⋅ {U}_{A}$ berechnen lässt, wobei ${U}_{A} = {U}_{S} - {R}_{S}^{Rest} ⋅ {I}_{S}$ die über den WIG-Lichtbogen abfallende Spannung ist, die sich - analog zu Formel (3) - aus der Schweißspannung *U_{S}* abzüglich der bei dem Schweißstrom *I_{S}* über die bekannten Widerstände ${R}_{S}^{Rest}$ des WIG-Schweißstromkreises abfallenden Spannungen berechnen lässt, und *K* eine vorgegebene Proportionalitätskonstante ist.

### Bezugszeichenliste:

| | | | |
|---|---|---|---|
| 100, 300: | Vorrichtung | 180, 380: | Anschlussmittel |
| 110, 310: | Schweißstromquelle | 190, 390: | Steuereinrichtung |
| 112, 312: | Leistungsteil | 200, 400: | System |
| 114, 314: | Steuereinheit der Schweißstromquelle | 210: | Schweißbrenner |
| | | 212: | Brennerteil |
| 116, 316: | Absaugeinrichtung | 214, 319: | Schlauchpaket |
| 117: | Absaugluftstrom | 216: | Handgriff |
| 118: | elektrischer Ausgang der Schweißstromquelle | 218: | Brennerkopf |
| | | 220: | Öffnung |
| 119: | elektrische Leitung | 222: | Absaugöffnungen |
| 120, 344: | Absauganschluss | 226: | Schweißstelle |
| 122: | Nutzerschnittstelle der Schweißstromquelle | 228: | Werkstück |
| | | 229: | Schweißlichtbogen |
| 150, 350: | Drahtvorschubgerät | 230: | Brennertaster |
| 152: | Schweißdraht | 232: | Brennersteuereinheit |
| 154: | Schweißdrahtvorrat | 234: | Saugfeld |
| 156: | Schweißdrahtfördereinrichtung | 317: | Absauggerät |
| 160, 360: | Steuereinheit des Drahtvorschubgeräts | 318: | Anschluss der Schweißstromquelle für ein Schlauchpaket |
| 162: | elektrischer Eingang | | |
| 164: | Schutzgas-Einlass | 322: | Nutzerschnittstelle der Schweißstromquelle |
| 165: | Gasleitung | | |
| 166: | Schutzgasquelle | 330: | Steuereinheit des Absauggeräts |
| 168, 368: | Brenneranschluss | | |
| 169, 324: | Ventil | 332: | Ventilator |
| 170: | Schutzgasstrom | 336: | Nutzerschnittstelle des Absauggeräts |
| 172, 372: | Nutzerschnittstelle des Drahtvorschubgeräts | | |

## Patentansprüche

1. Vorrichtung (100, 300) zum Schweißen oder Löten unter Schutzgasatmosphäre,
- mit einer Stromquelle (110, 310) zur Bereitstellung eines Schweiß- oder Lötstroms,
- mit Anschlussmitteln (180, 380) zum Anschließen eines Brenners (210) mit integrierter Absaugung,
- mit einer Absaugeinrichtung (116, 316) zur Bereitstellung eines Absaugluftstroms (117) über die Anschlussmittel (180, 380) und
- mit einer Steuereinrichtung (190, 390) zur Steuerung der Absaugeinrichtung (116, 316),
**dadurch gekennzeichnet,**
- **dass** die Steuereinrichtung (190, 390) dazu eingerichtet ist, eine Abstands-Information über den Brennerabstand (*L_{B}*) eines an die Anschlussmittel (180, 380) angeschlossenen Brenners (210) zur Schweiß- oder Lötstelle (226) abhängig von aktuellen Schweiß- oder Lötparametern zu ermitteln und die Absaugeinrichtung (116, 316) abhängig von der ermittelten Abstands-Information zu steuern.

2. Vorrichtung (100, 300) nach Anspruch 1,
**dadurch gekennzeichnet, dass** die Steuereinrichtung (190, 390) dazu eingerichtet ist, die Absaugleistung abhängig von der ermittelten Abstands-Information zu steuern, insbesondere einen von der ermittelten Abstands-Information abhängigen Absaugleistungswert einzustellen.

3. Vorrichtung (100, 300) nach Anspruch 1 oder 2,
**dadurch gekennzeichnet, dass** die Steuereinrichtung (190, 390) dazu eingerichtet ist, die Abstands-Information abhängig von einem oder mehreren der folgenden Schweiß- oder Lötparameter zu ermitteln: von der Stromquelle (110, 310) bereitgestellte Stromstärke (*I_{S}*), von der Stromquelle bereitgestellte Spannung (*U_{S}*), Drahtvorschubgeschwindigkeit (*v_{D}*) eines verwendeten Drahtvorschubgeräts (150, 350), Lichtbogenlänge.

4. Vorrichtung (100, 300) nach einem der Ansprüche 1 bis 3,
**dadurch gekennzeichnet, dass** die Steuereinrichtung (190, 390) dazu eingerichtet ist, die aktuellen Schweiß- oder Lötparameter von der Stromquelle (110, 310) und/oder von einem etwaig verwendeten Drahtvorschubvorgerät zu erhalten.

5. Vorrichtung (100, 300) nach einem der Ansprüche 1 bis 4,
**dadurch gekennzeichnet, dass** die Steuereinrichtung (190, 390) dazu eingerichtet ist, ein Brennertastersignal über das Betätigen eines Brennertasters (230) eines an die Anschlussmittel (180, 380) angeschlossenen Brenners (210) zu erhalten und bei Erhalt des Brennertastersignals die Absaugeinrichtung (116, 316) einzuschalten oder deren Absaugleistung für einen Leistungsbetrieb zu erhöhen.

6. Vorrichtung (100, 300) nach einem der Ansprüche 1 bis 5,
**dadurch gekennzeichnet, dass** die Anschlussmittel (180, 380) einen Absauganschluss (120, 344) zum Anschließen einer Absaugleitung eines an die Anschlussmittel (180, 380) angeschlossenen Brenners (210) umfassen.

7. Vorrichtung (100, 300) nach einem der Ansprüche 1 bis 6,
**dadurch gekennzeichnet, dass** die Vorrichtung (100,300) ein an die Stromquelle (110, 310) anschließbares Drahtvorschubgerät (150, 350) umfasst und die Anschlussmittel (180, 380) einen Anschluss am Drahtvorschubgerät (150, 350) umfassen.

8. Vorrichtung (100, 300) nach einem der Ansprüche 1 bis 7,
**dadurch gekennzeichnet, dass** die Steuereinrichtung (190, 390) dazu eingerichtet ist, die Absaugleistung zu Beginn des Betriebs oder Leistungsbetriebs der Absaugeinrichtung (116, 316) zunächst auf einen Start-Absaugleistungswert einzustellen und danach abzusenken.

9. System (200, 400) zum Schweißen oder Löten unter Schutzgasatmosphäre,
- umfassend eine Vorrichtung (100, 300) nach einem der Ansprüche 1 bis 8 und
- einen an die Anschlussmittel (180, 380) der Vorrichtung anschließbaren Brenner mit integrierter Absaugung.

10. Verfahren zum Steuern einer Absaugeinrichtung (116, 316) einer Vorrichtung (100, 300) zum Schweißen oder Löten unter Schutzgasatmosphäre, insbesondere einer Vorrichtung (100, 300) nach einem der Ansprüche 1 bis 8,
- bei dem eine Abstands-Information über den Brennerabstand (*L_{B}*) eines an die Anschlussmittel (180, 380) angeschlossenen Brenners (210) zur Schweiß- oder Lötstelle (226) ermittelt wird und die Absaugeinrichtung (116, 316) abhängig von der ermittelten Abstands-Information gesteuert wird, wobei die Abstands-Information abhängig von aktuellen Schweiß- oder Lötparametern ermittelt wird.

11. Verfahren nach Anspruch 10,
**dadurch gekennzeichnet, dass** die Absaugleistung der Absaugeinrichtung (116, 316) abhängig von der Brenner-Information gesteuert wird.

## Claims

1. Apparatus (100, 300) for welding or soldering under a shielding gas atmosphere,
- having a power source (110, 310) for providing a welding or soldering current,
- having connection means (180, 380) for connecting a torch (210) with integrated extraction,
- having an extraction device (116, 316) for providing an extraction air flow (117) via the connection means (180, 380), and
- having a control device (190, 390) for controlling the extraction device (116, 316),
**characterized**
- **in that** the control device (190, 390) is configured to determine distance information concerning the torch distance (L_{B}) of a torch (210), connected to the connection means (180, 380), from the welding or soldering location (226) as a function of current welding or soldering parameters, and to control the extraction device (116, 316) as a function of the determined distance information.

2. Apparatus (100, 300) according to claim 1,
**characterized in that** the control device (190, 390) is configured to control the extraction power as a function of the determined distance information, in particular to set an extraction power value depending on the determined distance information.

3. Apparatus (100, 300) according to claim 1 or 2,
**characterized in that** the control device (190, 390) is configured to determine the distance information as a function of one or more of the following welding or soldering parameters: current (I_{S}) provided by the power source (110, 310), voltage (U_{S}) provided by the power source, wire feed speed (v_{D}) of a wire feeder (150, 350) used, arc length.

4. Apparatus (100, 300) according to any one of claims 1 to 3, **characterized in that** the control device (190, 390) is configured to receive the current welding or soldering parameters from the power source (110, 310) and/or from a possibly used wire feeder.

5. Apparatus (100, 300) according to any one of claims 1 to 4, **characterized in that** the control device (190, 390) is configured to receive a torch trigger signal concerning the actuation of a torch trigger (230) of a torch (210) connected to the connection means (180, 380), and, upon receiving the torch trigger signal, to switch on the extraction device (116, 316) or to increase its extraction power for a power operation.

6. Apparatus (100, 300) according to any one of claims 1 to 5, **characterized in that** the connection means (180, 380) comprise an extraction connection (120, 344) for connecting an extraction line of a torch (210) connected to the connection means (180, 380).

7. Apparatus (100, 300) according to any one of claims 1 to 6, **characterized in that** the apparatus (100, 300) comprises a wire feeder (150, 350) connectable to the power source (110, 310), and the connection means (180, 380) comprise a connection on the wire feeder (150, 350).

8. Apparatus (100, 300) according to any one of claims 1 to 7, **characterized in that** the control device (190, 390) is configured to initially set the extraction power to a starting extraction power value at the beginning of the operation or the power operation of the extraction device (116, 316), and subsequently to reduce it.

9. System (200, 400) for welding or soldering under a shielding gas atmosphere,
- comprising an apparatus (100, 300) according to any one of claims 1 to 8, and
- a torch with integrated extraction connectable to the connection means (180, 380) of the apparatus.

10. Method for controlling an extraction device (116, 316) of an apparatus (100, 300) for welding or soldering under a shielding gas atmosphere, in particular an apparatus (100, 300) according to any one of claims 1 to 8,
- in which distance information concerning the torch distance (L_{B}) of a torch (210), connected to the connection means (180, 380), from the welding or soldering location (226) is determined, and the extraction device (116, 316) is controlled as a function of the determined distance information, wherein the distance information is determined as a function of current welding or soldering parameters.

11. Method according to claim 10,
**characterized in that** the extraction power of the extraction device (116, 316) is controlled as a function of the torch information.

## Revendications

1. Dispositif (100, 300) pour le soudage ou le brasage sous atmosphère de gaz protecteur,
- comprenant une source de courant (110, 310) pour fournir un courant de soudage ou de brasage,
- comprenant des moyens de raccordement (180, 380) pour raccorder une torche (210) aspirante,
- comprenant un dispositif d'aspiration (116, 316) pour fournir un flux d'air d'aspiration (117) à l'aide des moyens de raccordement (180, 380) et
- comprenant un dispositif de commande (190, 390) pour commander le dispositif d'aspiration (116, 316),
- **caractérisé**
- **en ce que** le dispositif de commande (190, 390) est conçu pour déterminer une information de distance *(L_{B})* entre une torche (210) raccordée aux moyens de raccordement (180, 380) et le point de soudage ou de brasage (226) en fonction des paramètres actuels de soudage ou de brasage, et pour commander le dispositif d'aspiration (116, 316) en fonction de l'information de distance déterminée.

2. Dispositif (100, 300) selon la revendication 1,
**caractérisé en ce que** le dispositif de commande (190, 390) est conçu pour commander la puissance d'aspiration en fonction de l'information de distance déterminée, notamment pour régler une valeur de puissance d'aspiration en fonction de l'information de distance déterminée,

3. Dispositif (100, 300) selon la revendication 1 ou 2,
**caractérisé en ce que** le dispositif de commande (190, 390) est conçu pour déterminer l'information de distance en fonction d'un ou plusieurs des paramètres de soudage ou de brasage suivants : l'intensité de courant (*I_{S}*) fournie par la source de courant (110, 310), la **tension** (*Us*) fournie par la source de courant, la vitesse d'entraînement de fil *(v_{D})* d'un dispositif d'entraînement de fil (150, 350) utilisé, la longueur de l'arc.

4. Dispositif (100, 300) selon l'une quelconque des revendications 1 à 3, **caractérisé en ce que** le dispositif de commande (190, 390) est conçu pour obtenir les paramètres actuels de soudage ou de brasage de la source de courant (110, 310) et/ou d'un dispositif d'entraînement de fil éventuellement utilisé.

5. Dispositif (100, 300) selon l'une quelconque des revendications 1 à 4, **caractérisé en ce que** le dispositif de commande (190, 390) est conçu pour obtenir un signal de palpeur de torche par l'actionnement d'un capteur de torche (230) d'une torche (210) raccordée aux moyens de raccordement (180, 380) et, à la réception du signal de capteur de torche pour mettre en marche le dispositif d'aspiration (116, 316) ou pour augmenter sa puissance d'aspiration en mode de fonctionnement.

6. Dispositif (100, 300) selon l'une quelconque des revendications 1 à 5, **caractérisé en ce que** les moyens de raccordement (180, 380) comprennent un raccord d'aspiration (120, 344) pour raccorder une conduite d'aspiration d'une torche (210) raccordée aux moyens de raccordement (180, 380).

7. Dispositif (100, 300) selon l'une quelconque des revendications 1 à 6, **caractérisé en ce que** le dispositif (100, 300) comprend un dispositif d'entraînement de fil (150, 350) pouvant être raccordé à la source de courant (110, 310) et les moyens de raccordement (180, 380) comprennent un raccord au dispositif d'alimentation en fil (150, 350).

8. Dispositif (100, 300) selon l'une quelconque des revendications 1 à 7, **caractérisé en ce que** le dispositif de commande (190, 390) est conçu pour régler dans un premier temps la puissance d'aspiration à une valeur de puissance d'aspiration de démarrage au début du fonctionnement ou du mode de fonctionnement du dispositif d'aspiration (116, 316), puis pour la réduire.

9. Système (200, 400) pour le soudage ou le brasage sous atmosphère de gaz protecteur,
- comprenant un dispositif (100, 300) selon l'une quelconque des revendications 1 à 8 et
- une torche aspirante pouvant être raccordée aux moyens de raccordement (180, 380) du dispositif.

10. Procédé de commande d'un dispositif d'aspiration (116, 316) d'un dispositif (100, 300) pour le soudage ou le brasage sous atmosphère de gaz protecteur, notamment un dispositif (100, 300) selon l'une des revendications 1 à 8, dans lequel l'information de distance concernant la distance de torche *(L_{B})* entre la torche (210) raccordée aux moyens de raccordement (180, 380) et le point de soudage ou de brasage (226) est déterminée et le dispositif d'aspiration (116, 316) est commandé en fonction de l'information de distance déterminée, l'information de distance étant déterminée en fonction des paramètres actuels de soudage ou de brasage.

11. Procédé selon la revendication 10, **caractérisé en ce que** la puissance d'aspiration du dispositif d'aspiration (116, 316) est commandée en fonction de l'information de torche.
